# EUROPEAN PATENT APPLICATION

(11) **EP 3 715 203 A1**
(43) Date of publication of application: **30.09.2020**
(21) Application number: 20162560.5
(22) Date of filing: 12.03.2020
(51) Int. Cl.: B60W 30/09, B62D 6/00, G05D 1/02, G08G 1/16, G01C 21/34

(54) **VEHICLE DRIVING SUPPORT SYSTEM, METHOD, COMPUTER-PROGRAM PRODUCT, AND VEHICLE**

(30) Priority: 29.03.2019 JP 2019065418
(71) Applicant: Mazda Motor Corporation, Hiroshima 730-8670 (JP)
(72) Inventor: TAKAHASHI, Hideki, Fuchu-cho, Aki-gun,, Hiroshima 730-8670 (JP)
(74) Representative: Müller-Boré & Partner Patentanwälte PartG mbB

(57) **Abstract**

Provided is a vehicle driving support system that achieves a balance between accurately evaluating the path evaluation parameter of a candidate path and reducing the load of calculating the path evaluation parameter. A vehicle driving support system 100 includes an ECU 10 that is a controller. The ECU 10 sets a target path and a target stop position TP on a travel road based on travel road information, and controls a vehicle 1 so as to travel along the target path and stop at the target stop position TP. The ECU 10 sets sampling points SP at intervals of d₁ along a part of a candidate path RC that is in the vicinity of the target stop position TP, and sets the sampling points SP at intervals of d₂, longer than the interval d₁, along the other part of the candidate path RC.

## Description

### BACKGROUND OF THE INVENTION

### Field of the Invention

The present invention relates to a vehicle driving support system installable or installed in a vehicle, to a respective vehicle, method and computer-program product.

### Description of the Related Art

As algorithms used to set candidate paths of a vehicle (i.e., candidates that can be a target path for the vehicle to actually travel along), the method of potentials, spline interpolation functions, A-star (A*), RRT, and the state lattice method are known. Vehicle driving support systems using such algorithms have been proposed.

These algorithms allow a plurality of candidate paths to be set on a travel road of a vehicle. A path evaluation parameter of each candidate path is calculated particularly from the viewpoint of obstacle circumvention etc., and one candidate path determined as appropriate based on the calculation result is selected as a target path. For example, International Publication No. WO 2013/051081 discloses a vehicle driving support system that sets a plurality of candidate paths on a grid map and selects one candidate path based on a movement evaluation parameter.

The system described in International Publication No. WO 2013/051081 calculates the movement evaluation parameter (also referred to as movement cost) at all those cells of a plurality of cells on the grid map that the candidate path passes through. While a technique of thus calculating a path evaluation parameter (also referred to as path cost) at a large number of positions on a candidate path is rational from the viewpoint of enhancing the evaluation accuracy of the path evaluation parameter of the candidate path, a heavy load of calculation is imposed on the system.

Especially when a technique like the state lattice method that can set a large number of candidate paths is used, a huge load of calculating the path evaluation parameter may be imposed on the system. Therefore, a balance has been sought between reducing the load of calculation and accurately evaluating a path evaluation parameter.

The present invention has been made to solve this problem, and an object thereof is to provide a vehicle driving support that achieves a balance between accurately evaluating the path evaluation parameter of a candidate path and reducing the load of calculating the path evaluation parameter.

### SUMMARY OF THE INVENTION

This object is solved according to the invention by the features of the independent claims. Particular embodiments of the invention are subject of the dependent claims.

To solve the above problem, according to one aspect, there is provided a vehicle driving support system to be installed in a vehicle. This system includes a travel road information acquiring device that acquires or can acquire travel road information relating to a travel road, and a controller that is configured to set a target path and a target stop position on the travel road based on the travel road information and to control the vehicle so as to travel substantially along the target path and stop at the target stop position. The controller is configured to set a plurality of candidate paths on the travel road based on the travel road information, set a plurality of sampling points at specified (predetermined or predeterminable) intervals along each of the plurality of candidate paths, calculate a path evaluation parameter (particularly a path cost) at each of the plurality of sampling points, and select one of the plurality of candidate paths as the target path based on the path evaluation parameter (particularly the path cost). The controller is further configured to set the sampling points at first intervals along a part of the candidate path that is in the vicinity of the target stop position, and set the sampling points at second intervals, longer than the first intervals, along the other part of the candidate path.

In this configuration, the controller particularly sets the sampling points at the first intervals along the part of the candidate path that is in the vicinity of the target stop position. Since the first interval is shorter than the second interval, a plurality of sampling points are thus set at a relatively high density in the vicinity of the target stop position. As a result, the path evaluation parameter (particularly the path cost) in the vicinity of the target stop position can be evaluated with high accuracy, and the vehicle can be safely stopped at the target stop position.

On the other hand, for the other part of the candidate path (i.e., the part other than the part in the vicinity of the target stop position), the controller sets the sampling points at the second intervals along this other part. Since the second interval is longer than the first interval, a plurality of sampling points are thus set at a relatively low density in the other part. As a result, the load of calculating the path evaluation parameter (particularly the path cost) in the other part can be reduced. While the relatively low density of the sampling points reduces the evaluation accuracy of the path evaluation parameter (particularly the path cost) in the other part, this evaluation accuracy has a relatively minor impact on stopping the vehicle at the target stopping position.

Thus, the above configuration makes it possible to evaluate the path evaluation parameter (particularly the path cost) with accuracy sufficient for practical use while reducing the load of calculation. As a result, a balance is achieved between accurately evaluating the path evaluation parameter (particularly the path cost) of a candidate path and reducing the load of calculating the path evaluation parameter (particularly the path cost).

According to a particular embodiment, the controller may be configured to set only the sampling points that are set along a candidate path including the target stop position, at the first intervals.

This configuration makes it possible to reduce the load of calculation by limiting the number of the sampling points while ensuring that the vehicle stops safely at the target stop position

Particularly, the controller may be configured to set the sampling points at the first intervals in a larger part of the candidate path as the moving speed of the vehicle is higher.

As the moving speed of the vehicle is higher, stopping the vehicle at the target stop position requires more attention to safety. The controller configured as described above sets the sampling points at the first intervals in a larger part of the candidate path as the moving speed of the vehicle is higher. As a result, it is possible to evaluate the path evaluation parameter (particularly the path cost) in the vicinity of the target stop position with high accuracy and safely stop the vehicle at the target stop position.

It is not necessary that the part of the candidate path in which the sampling points are set at the first intervals become continuously larger as the moving speed of the vehicle increases. For example, a form in which this part becomes larger stepwise as the moving speed of the vehicle increases is also included in the scope of the present disclosure.

Further particularly, the controller may be configured to set the sampling points at longer intervals as the sampling points are set farther away from the vehicle in a traveling direction of the vehicle.

In this configuration, the sampling points can be set at a relatively low density at positions far away from the vehicle in the traveling direction of the vehicle, to thereby reduce the load of calculating the path evaluation parameter (particularly the path cost). On the other hand, the sampling points can be set at a relatively high density in the vicinity of the vehicle where more attention to safety is required, to thereby evaluate the path evaluation parameter (particularly the path cost) in the vicinity of the vehicle (e.g. within a specified distance) with high accuracy.

It is not necessary that the setting interval of the sampling points become continuously longer as the distance from the vehicle increases. For example, a form in which this interval becomes longer stepwise as the distance from the vehicle increases is also included in the scope of the present disclosure.

Further particularly, the controller may be configured to set the sampling points at the first intervals along a part of the candidate path that is in the vicinity of the vehicle, and set the sampling points at the second intervals along the other part of the candidate path.

In this configuration, the first intervals and the second intervals used in setting the sampling points along the part of the candidate path that is in the vicinity of the target stop position and along the other part thereof, respectively, are also used in setting the sampling points along the part of the candidate path that is in the vicinity of the vehicle and along the other part thereof, respectively. Thus, using common values can simplify the calculation of the path evaluation parameter (particularly the path cost) and reduce the load of calculating the path evaluation parameter (particularly the path cost).

Further particularly, the controller may be configured to set an amount of control for speed control and/or steering control of the vehicle at each of the plurality of sampling points.

This configuration makes it possible to finely control the speed and/or steering of the vehicle by using a relatively large number of amounts of control in the vicinity of the target stop position where the sampling points are set at a relatively high density. As a result, the behavior of the vehicle when stopping at the target stop position can be smoothed.

According to another aspect, there is provided a vehicle comprising a vehicle driving support system according to the above aspect or a particular embodiment thereof.

According to yet another aspect, there is provided a computer-implemented vehicle driving support method comprising:
acquiring travel road information relating to a travel road; and
setting a target path and a target stop position on the travel road based on the travel road information;
wherein the vehicle driving support method further comprises:
   setting a plurality of candidate paths on the travel road based on the travel road information;
   setting a plurality of sampling points at specified (predetermined or predeterminable) intervals along each of the plurality of candidate paths;
   calculating a path evaluation parameter at each of the plurality of sampling points; and
   selecting one of the plurality of candidate paths as the target path based on the path evaluation parameter,
   wherein the sampling points are set at first intervals along a part of the candidate path that is in the vicinity of the target stop position, and the sampling points are set at second intervals, longer than the first intervals, along the other part of the candidate path.

According to a particular embodiment, only the sampling points that are set along the candidate path including the target stop position, are set at the first intervals.

Particularly, the sampling points are set at the first intervals in a larger part of the candidate path as a moving speed of the vehicle is higher.

Further particularly, the sampling points are set at longer intervals as the sampling points are set farther away from the vehicle in a traveling direction of the vehicle.

Further particularly, the sampling points (SP) are set at the first intervals along a part of the candidate path that is in the vicinity of the vehicle, and the sampling points are set at the second intervals along the other part of the candidate path.

Further particularly, an amount of control for speed control and/or steering control of the vehicle is set at each of the plurality of sampling points.

According to another aspect, there is provided a computer program product comprising computer readable instructions which, when loaded and executed on a suitably system, perform the steps of a vehicle driving support method according to the above aspect or a particular embodiment thereof.

According to the above, a vehicle driving support system can be provided that achieves a balance between accurately evaluating the path evaluation parameter (particularly the path cost) of a candidate path and reducing the load of calculating the path evaluation parameter (particularly the path cost).

### BRIEF DESCRIPTION OF THE DRAWINGS

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a configuration diagram of a vehicle driving support system according to an embodiment;
FIG. 2 is a view illustrating candidate paths and sampling points;
FIG. 3 is a view illustrating candidate paths and sampling points;
FIG. 4 is a view illustrating candidate paths and sampling points; and
FIG. 5 is a flowchart showing calculations executed by the ECU of FIG. 1.

### DETAILED DESCRIPTION OF THE PREFERRED EMBODIMENT

An embodiment will be described below with reference to the accompanying drawings. To make the description easy to understand, the same components in the drawings are denoted by the same reference signs and repetition of the same description will be avoided.

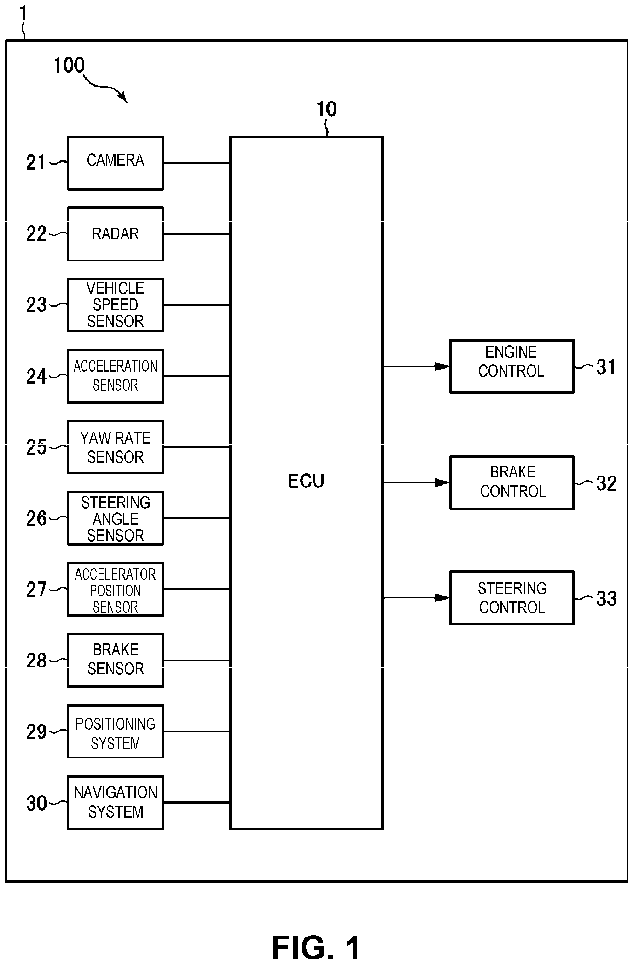

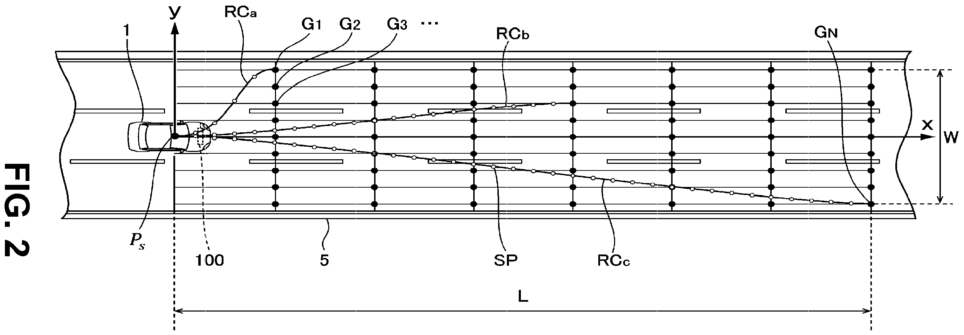

First, an overview of a vehicle driving support system 100 according to an embodiment of the present invention will be described with reference to FIG. 1 and FIG. 2. FIG. 1 is a configuration diagram of the vehicle driving support system 100. FIG. 2 is a view illustrating candidate paths RC and sampling points SP.

The vehicle driving support system 100 is installed or installable in a vehicle 1 and provides driving support control under which the vehicle 1 travels along a target path. As shown in FIG. 1, the vehicle driving support system 100 includes an electronic control unit (ECU) 10, one or more, particularly a plurality of sensors, and/or one or more, particularly a plurality of control systems. The plurality of sensors include a camera 21, a radar 22, a vehicle speed sensor 23 that detects a behavior of the vehicle 1 and a driving operation by an occupant, an acceleration sensor 24, a yaw rate sensor 25, a steering angle sensor 26, an accelerator position sensor 27, and/or a brake sensor 28. The plurality of sensors further or alternatively include a positioning system 29 that detects the position of the vehicle 1, and/or a navigation system 30. The plurality of control systems includes an engine control system 31, a brake control system 32, and/or a steering control system 33.

As other sensors, a peripheral sonar that measures the distance and position of a structure around the vehicle 1 relative to the vehicle 1, a corner radar that measures an approach of a structure around the vehicle 1 at four corners of the vehicle 1, and/or an inner camera that takes images of the inside of the cabin of the vehicle 1, may be included.

The ECU 10 is an example of the controller according to an embodiment of the present invention. The ECU 10 is formed by or comprises a computer including a CPU, a memory that stores various programs, an input-output device, and/or others. The ECU 10 executes various calculations based on signals received from the one or more, particularly plurality of sensors, and sends control signals for appropriately operating an engine system, a brake system, and/or a steering system to the engine control system 31, the brake control system 32, and the steering control system 33, respectively.

The ECU 10 performs calculations to identify the position on a travel road based on travel road information. The travel road information is information relating to a travel road on which the vehicle 1 is traveling, and includes, for example, information relating to one or more of the following: the shape of the travel road (particularly straight, curved and/or the curvature of a curve), the width of the travel road, the number of lanes, the width of the lane, etc. The travel road information is acquired by one or more of the following: the camera 21, the radar 22, the navigation system 30, etc.

FIG. 2 shows a state where the vehicle 1 is traveling on a travel road 5. By performing calculations based on the travel road information, the ECU 10 sets a plurality of imaginary grid points Gₙ (n = 1, 2,...N) on the travel road 5 present in the traveling direction of the vehicle 1. When the extension direction of the travel road 5 is defined as an x-direction and the width direction of the travel road 5 is defined as a y-direction, the grid points Gₙ are arranged in a lattice pattern along the x-direction and the y-direction.

The range in which the ECU 10 sets the grid points Gₙ spans a distance L on a front side of the vehicle 1 along the travel road 5. The distance L is calculated based on the speed of the vehicle 1 at the time of execution of calculation. In this embodiment, the distance L is a distance that the vehicle 1 is expected to travel in a specified (predetermined or predeterminable) fixed time t (e.g., three seconds) at the speed (V) at the time of execution of calculation (L = V × t). However, the distance L may instead be a specified (predetermined or predeterminable) fixed distance (e.g., 100 m) and/or a function of the speed (and acceleration). A width W of the range in which the grid points Gₙ are set particularly is set to substantially the same value as the width of the travel road 5. Setting such a plurality of grid points Gₙ allows identification of the position on the travel road 5.

Since the travel road 5 shown in FIG. 2 is a straight section, the grid points Gₙ are disposed in a rectangular pattern. However, as the grid points Gₙ are disposed along the extension direction of a travel road, when the travel road includes a curved section, the grid points Gₙ are disposed along the curve of the curved section.

The ECU 10 executes calculations for setting candidate paths RC (i.e., candidates that can be a target path for the vehicle 1 to actually travel along) based on the travel road information and obstacle information. The obstacle information is information relating to whether there is any obstacle (e.g., a preceding vehicle, parked vehicle, pedestrian, dropped object, etc.) on the travel road 5 in the traveling direction of the vehicle 1, and to the type, size, moving direction, moving speed, etc. of that obstacle. The obstacle information is acquired by the camera 21 and the radar 22.

The ECU 10 sets a plurality of candidate paths RC by path search particularly using the state lattice method. In the state lattice method, a plurality of candidate paths RC are set that extend, while branching off, from a start point Pₛ toward the grid points Gₙ present in the traveling direction of the vehicle 1. The start point Pₛ is the position of the vehicle 1 at the time of execution of calculation. In the example shown in FIG. 2, the vehicle 1 particularly is located at the origin of the xy-coordinate system, and therefore the coordinate of the start point Pₛ is (0, 0). The ECU 10 specifies a multidimensional function with the x-coordinate being a variable relative to the y-coordinate, and sets, as the candidate paths RC, curves that are drawn in the xy-coordinate system based on the multidimensional function. This multidimensional function is, for example, a five-dimensional function or a three-dimensional function. FIG. 2 shows candidate paths RCₐ, RC_{b}, RC_{c} that are some of the plurality of candidate paths RC set by the ECU 10.

Further, the ECU 10 selects one candidate path RC with a minimum path evaluation parameter from among the plurality of candidate paths RC. Specifically, as shown in FIG. 2, the ECU 10 first sets a plurality of sampling points SP along each candidate path RC. The plurality of sampling points SP are disposed at intervals on each candidate path RC. FIG. 2 shows, as an example, the sampling points SP that are set at regular intervals along the entire candidate paths RCₐ, RC_{b}, RC_{c}.

Next, the ECU 10 calculates a path evaluation parameter (also referred to as path cost) at each sampling point SP. Further, for each candidate path RC, the ECU 10 adds up the path evaluation parameters at the respective sampling points SP set along the candidate path RC, and divides the total value by the overall length of the candidate path RC.

The ECU 10 particularly uses a value obtained by this division as the path evaluation parameter of that candidate path RC. The ECU 10 selects a candidate path RC with a minimum path evaluation parameter from among the plurality of candidate paths RC, and sets this candidate path RC as a target path.

Moreover, the ECU 10 sets an amount of control for speed control and/or steering control of the vehicle 1 at each sampling point SP. This amount of control is set based on the speed and/or steering required to cause the vehicle 1 to travel along the target path, and is used also to calculate the path evaluation parameter.

Based on this amount of control, the ECU 10 sends control signals to the engine control system 31, the brake control system 32, and/or the steering control system 33.

The camera 21 is an example of the travel road information acquiring device according to an embodiment of the present invention. The camera 21 takes one or more images of the surroundings of the vehicle 1 and outputs image data.

Based on the image data received from the camera 21, the ECU 10 identifies at least one object (e.g., one or more of the following: a preceding vehicle, parked vehicle, oncoming vehicle, pedestrian, travel road, more specifically a traveling lane on the road and/or an oncoming lane, division line (particularly lane line, white line, yellow line), traffic signal, traffic sign, stop line, intersection, etc.)

When the object is a vehicle, the ECU 10 particularly identifies the type of the vehicle (a large-size vehicle such as a truck, a passenger vehicle, etc.).

The ECU 10 may acquire information on an object from the outside by means of a transportation infrastructure, and/or inter-vehicle communication, etc. Thus, the type, relative position, and/or moving direction, etc. of the object particularly are or can be identified.

The radar 22 is an example of the travel road information acquiring device according to an embodiment of the present invention.

The radar 22 particularly measures the position and/or speed of an object (especially at least one of the following: a preceding vehicle, parked vehicle, oncoming vehicle, pedestrian, dropped object on the travel road 5 (the traveling lane on the travel road 5 and/or the adjacent oncoming lane), traffic sign, etc.).

For example, a millimeter-wave radar can be used as the radar 22. The radar 22 transmits a radio wave in the traveling direction of the vehicle 1 and receives a reflected wave that is the transmitted wave reflected by an object.

Based on the transmitted wave and the received wave, the radar 22 measures or detects the distance between the vehicle 1 and the object (e.g., a vehicle-to-vehicle distance) and/or the speed of the object relative to the vehicle 1.

In this embodiment, a laser radar, an ultrasonic sensor, or the like may be used instead of the radar 22 to measure the distance to an object and/or the relative speed of the object. Specifically, a plurality of sensors may be used to form a position and/or speed measuring device.

The vehicle speed sensor 23 particularly detects the absolute speed of the vehicle 1.

The acceleration sensor 24 particularly detects acceleration of the vehicle 1 (longitudinal acceleration and deceleration in a front-rear direction and lateral acceleration and deceleration in a lateral direction).

The yaw rate sensor 25 particularly detects a yaw rate of the vehicle 1.

The steering angle sensor 26 particularly detects a rotation angle (steering angle) of the steering wheel of the vehicle 1.

The accelerator position sensor 27 particularly detects the amount of depression of the accelerator pedal.

The brake sensor 28 particularly detects the amount of depression of the brake pedal.

The positioning system 29 particularly is or comprises a GPS system and/or a gyro system, and particularly detects the position of the vehicle 1 (current vehicle position information).

The navigation system 30 particularly has map information stored inside, and/or can provide the map information to the ECU 10.

Based on the map information and the current vehicle position information, the ECU 10 particularly identifies one or more road characteristics such as a road (particularly a traveling lane and/or an oncoming lane thereof), intersection, traffic signal, building, etc. present around the vehicle 1 (especially in the traveling direction). The map information may instead be stored inside the ECU 10 and/or may be (at least partly) obtained or retrieved online.

The engine control system 31 particularly controls the engine of the vehicle 1. When it is necessary to accelerate or decelerate the vehicle 1, the ECU 10 sends a control signal to the engine control system 31 to change the engine output.

The brake control system 32 particularly controls the brake device of the vehicle 1. When it is necessary to decelerate the vehicle 1, the ECU 10 sends a control signal to the brake control system 32 to generate braking force.

The steering control system 33 particularly controls the steering device of the vehicle 1. When it is necessary to change the traveling direction of the vehicle 1, the ECU 10 sends a control signal to the steering control system 33 to change the steering direction.

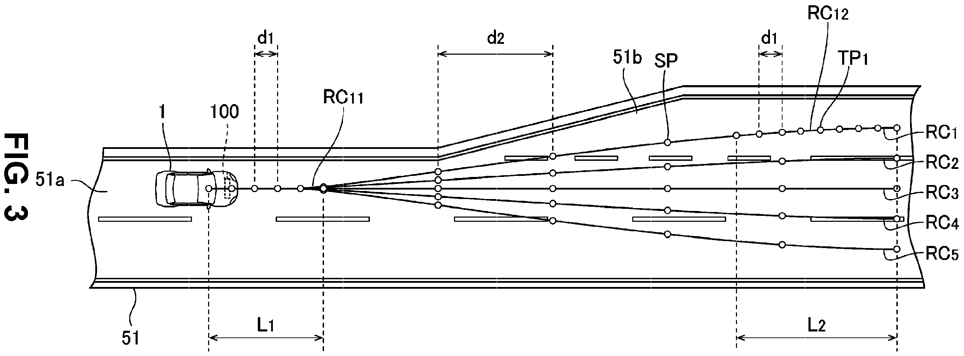

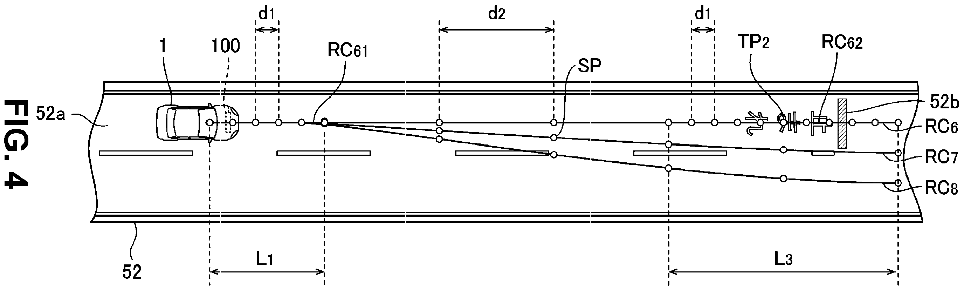

Next, calculations for setting the sampling points SP will be described with reference to FIG. 3 and FIG. 4. FIG. 3 and FIG. 4 are views illustrating the candidate paths RC and the sampling points SP.

As described above, the ECU 10 sets a plurality of sampling points SP along each candidate path RC. While setting a larger number of the sampling points SP can increase the evaluation accuracy of the path evaluation parameter of each candidate path RC, a larger load of calculation is imposed on the system, which impairs its practicality or effectiveness.

Therefore, to achieve a balance between accurately evaluating a path evaluation parameter and reducing the load of calculation, the ECU 10 sets the sampling points SP based on at least one target stop position TP. In the following, a method of setting the sampling points SP will be described.

FIG. 3 shows the candidate paths RC and the sampling points SP in the case where the vehicle 1 is traveling in a lane 51a of a travel road 51. An emergency parking bay 51b particularly is provided on the shoulder of the travel road 51, and the ECU 10 (see FIG. 1) is intended to make the vehicle 1 enter the emergency parking bay 51b from the lane 51a and stop at a target stop position TP₁. The target stop position TP₁ may be defined as one point in the emergency parking bay 51b or as a specified (predetermined or predeterminable) area of the emergency parking bay 51b.

A candidate path RC₁ including the target stop position TP₁, and additionally, candidate paths RC₂ to RC₅ are set on the travel road 51 by the above-described path search particularly using the state lattice method. The candidate paths RC₂ to RC₅ can be a target path when the vehicle 1 cannot stop at the target stop position TP₁ (e.g., when another vehicle is already parked in the vicinity of the target stop position TP₁).

The ECU 10 particularly sets the sampling points SP at intervals of d₁ along a part of the candidate path RC₁ that is in the vicinity of the vehicle 1. The interval d₁ is an example of the first interval according to an embodiment of the present invention.

Specifically, the ECU 10 sets the sampling points SP at intervals of d₁ along a first part RC₁₁ of the candidate path RC₁.

The first part RC₁₁ spans a length L₁ (e.g., about 10 m) in the x-direction (see FIG. 2) from the vehicle 1.

The ECU 10 particularly sets the length L₁ larger as the moving speed of the vehicle 1 is higher.

The ECU 10 particularly further sets the sampling points SP at intervals of d₁ along a part of the candidate path RC₁ that is in the vicinity of the target stop position TP₁.

Specifically, the ECU 10 sets the sampling points SP at intervals of d₁ along a second part RC₁₂ of the candidate path RC₁.

The second part RC₁₂ particularly includes the target stop position TP₁ and spans a length L₂ (e.g., 10 m) in the x-direction.

The ECU 10 particularly sets the length L₂ larger as the moving speed of the vehicle 1 is higher.

Moreover, the ECU 10 particularly sets the sampling points SP at intervals of d₂ along parts of the candidate path RC₁ other than the first part RC₁₁ and the second part RC₁₂. The interval d₂ is an example of the second interval according to an embodiment of the present invention.

The interval d₂ particularly is longer than the interval d₁ (e.g., d₁ = 0.2 m, d₂ = 2.0 m). Therefore, the sampling points SP particularly are set at a relatively high density along the first part RC₁₁ and the second part RC₁₂, while the sampling points SP particularly are set at a relatively low density along the other parts. In other words, the number of the sampling points SP per unit length in the first part RC₁₁ and the second part RC₁₂ is larger than that in the other parts.

In a part of the candidate path RC₁ other than the second part RC₁₂, the setting interval of the sampling points SP particularly becomes longer from d₁ to d₂ as the sampling points SP are set farther away from the vehicle 1 in the traveling direction of the vehicle 1.

On the other hand, for the candidate paths RC₂ to RC₅ that do not include the target stop position TP₁, the ECU 10 particularly sets the sampling points SP at intervals of d₁ along parts that span the length L₁ in the x-direction from the vehicle 1, and/or sets the sampling points SP at intervals of d₂ along the other parts.

FIG. 4 shows the candidate paths RC and the sampling points SP in the case where the vehicle 1 is traveling in a lane 52a of a travel road 52. A stop line 52b is provided on the travel road 52 in the traveling direction of the vehicle 1, and the ECU 10 (see FIG. 1) is intended to make the vehicle 1 stop at a target stop position TP₂ short of the stop line 52b.

A candidate path RC₆ including the target stop position TP₂, and additionally, candidate paths RC₇, RC₈ are set on the travel road 52 by the above-described path search using the state lattice method.

The candidate paths RC₇, RC₈ can be a target path when the vehicle 1 cannot stop at the target stop position TP₂ (e.g., when a pedestrian has rushed out of the shoulder of the travel road 52 to the vicinity of the target stop position TP₂).

The ECU 10 particularly sets the sampling points SP at intervals of d₁ along a first part RC₆₁ and a second part RC₆₂ of the candidate path RC₆.

The first part RC₆₁ specifically is a part that spans the length L₁ in the x-direction (see FIG. 2) from the vehicle 1, and/or the second part RC₆₂ includes the target stop position TP₂ and spans a length L₃ (e.g., 10 m) in the x-direction.

The ECU 10 particularly sets the length L₃ larger as the moving speed of the vehicle 1 is higher.

On the other hand, for the candidate paths RC₇, RC₈, the ECU 10 particularly sets the sampling points at intervals of d₁ along parts that span the length L₁ in the x-direction from the vehicle 1, and/or sets the sampling points at intervals of d₂ along the other parts.

As can be understood from FIG. 3 and FIG. 4, the ECU 10 particularly sets the sampling points SP preferentially in the vicinity of the target stop position TP₁ or TP₂ and in the vicinity of the vehicle 1. In other words, the ECU 10 reduces the density of the sampling points SP in the part of the candidate path RC other than both the part in the vicinity of the target stop position TP₁ or TP₂ and the part in the vicinity of the vehicle 1.

This makes it possible to evaluate the path evaluation parameters in the vicinity of the target stop position TP₁ or TP₂ and in the vicinity of the vehicle 1 with high accuracy, and at the same time reduce the load of calculating the path evaluation parameter in the other part.

Thus, a balance advantageously is achieved between reducing the load of calculation and accurately evaluating a path evaluation parameter.

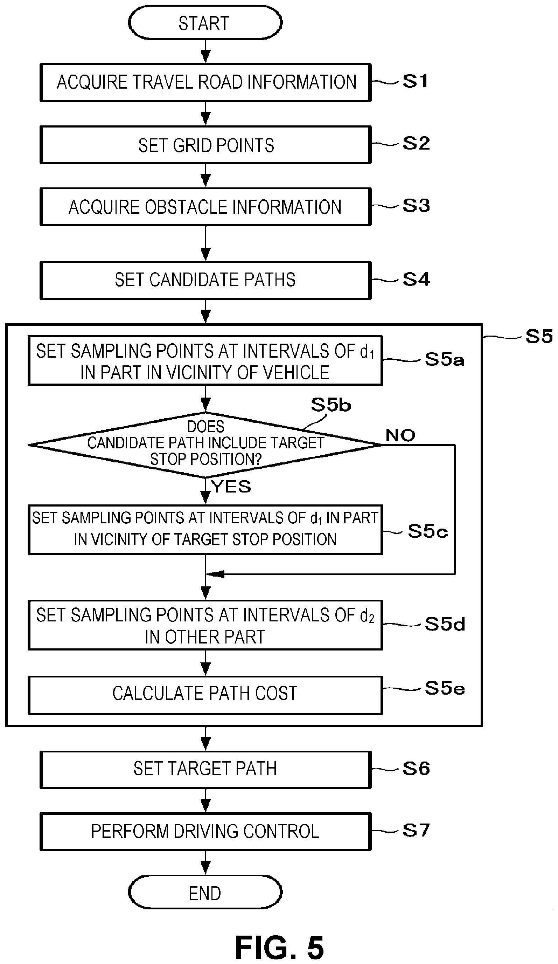

Next, calculations that the ECU 10 particularly executes when providing driving support control will be described with reference to FIG. 5. FIG. 5 is a flowchart showing the calculations executed by the ECU 10. The ECU 10 repeatedly executes the calculations shown in FIG. 5 (e.g., about once every 0.05 to 0.2 seconds).

First, in step S1, the ECU 10 acquires the travel road information from the camera 21, the radar 22, and the navigation system 30 (see FIG. 1).

Next, in step S2, the ECU 10 identifies the type and/or shape of the travel road (e.g., the extension direction of the travel road, the width of the travel road, etc.) based on the travel road information, and sets a plurality of grid points Gₙ (n = 1, 2,...N) on the travel road. For example, the ECU 10 sets grid points Gₙ at about 10 m intervals in the x-direction (see FIG. 2) and at about 0.875 m intervals in the y-direction (see FIG. 2).

Next, in step S3, the ECU 10 acquires the obstacle information from the camera 21 and/or the radar 22. Specifically, the ECU 10 acquires information relating to one or more of the following: whether there is any obstacle on the travel road in the traveling direction of the vehicle 1, the type of obstacle, the moving direction and/or moving speed of the obstacle, etc.

Next, in step S4, the ECU 10 sets a plurality of candidate paths RC on the travel road. Specifically, the ECU 10 specifies curved lines extending from the start point Pₛ (see FIG. 2) that is the position of the vehicle 1 at the time of execution of calculation, to the grid points Gₙ set in step S2, and sets these curved lines as the candidate paths RC.

Step S5 includes setting of the sampling points SP (steps S5a to S5d) and calculation of the path evaluation parameter (step S5e).

In step S5a, the ECU 10 sets the sampling points SP at intervals of d₁ along a part of the candidate path RC that is in the vicinity of the vehicle 1. In other words, the ECU 10 sets the sampling points SP at intervals of d₁ along a part of the candidate path RC that is within a specified (predeterminable or predeterminable) distance from the vehicle 1.

Here, the sampling points SP particularly are set along a part of the candidate path RC that spans the length L₁ in the x-direction (see FIG. 2) from the vehicle 1 (see FIG. 3 and FIG. 4).

The ECU 10 particularly sets the length L₁ larger as the moving speed of the vehicle 1 is higher.

Next, in step S5b, the ECU 10 determines whether or not the candidate path RC includes the target stop position TP. When it is determined that the candidate path RC includes the target stop position TP (S5b: YES), the ECU 10 moves to step S5c.

Next, in step S5c, the ECU 10 particularly sets the sampling points SP at intervals of d₁ along a part of the candidate path RC that is in the vicinity of the target stop position TP.

The sampling points SP particularly are set at intervals of d₁ in a larger part of the candidate path RC as the moving speed of the vehicle 1 is higher.

Next, in step S5d, the ECU 10 particularly sets the sampling points SP at intervals of d₂ along the other part of the candidate path RC (i.e., the part other than both the part in the vicinity of the target stop position TP and the part in the vicinity of the vehicle 1).

On the other hand, when it is determined in step S5b that the candidate path RC does not include the target stop position TP (S5b: NO), the ECU 10 moves to step S5d without going through step S5c.

When the candidate path RC does not include the target stop position TP (S5b: NO), in step S5e, the ECU 10 particularly sets the sampling points SP at intervals of d₂ along the other part of the candidate path RC (i.e., the part other than the part in the vicinity of the vehicle 1).

The range in which the sampling points SP are set at intervals of d₂ in this case particularly is larger than that when the candidate path RC includes the target stop position TP (S5b: YES). In other words, the number of the set sampling points SP particularly is smaller when the candidate path RC does not include the target stop position TP than when the candidate path RC includes the target stop position TP.

Next, in step S5e, the ECU 10 particularly calculates a path evaluation parameter (also referred to as path cost) at each sampling point SP in the candidate path RC. The path evaluation parameter may specifically be a parameter whose value is indicative of the suitability of a path, e.g. for achieving a given objective such as time efficiency, security, cost efficiency, etc. Exemplarily, suitability of the path may be inversely proportional to the value of the path evaluation parameter, so that the most suitable path minimizes the value of the path evaluation parameter. The path evaluation parameter (e.g. path cost) includes a value (cost) relating to one or more of the following: the speed, acceleration, lateral acceleration, a rate of change of the path, obstacle, etc. These values (costs) can be set as appropriate. As a general idea, a path evaluation parameter (path cost) includes a movement evaluation parameter (also referred to as movement cost) and a safety evaluation parameter (also referred to as safety cost). For example, when the vehicle travels along a straight path, the moving distance is shorter and therefore the movement evaluation parameter is lower, whereas when the vehicle travels along a path that circumvents an obstacle etc., the moving distance is longer and therefore the movement evaluation parameter is higher. The movement evaluation parameter increases as the lateral acceleration increases. As described above, the ECU 10 particularly stores a value obtained by division in the memory (not shown) as the path evaluation parameter of the candidate path RC.

The ECU 10 executes these calculations in step S5 for each of the plurality of candidate paths RC set in step S4.

Next, in step S6, the ECU 10 particularly sets a target path. Specifically, the ECU 10 selects a candidate path RC with a minimum path evaluation parameter, and sets this candidate path RC as a target path.

Next, in step S7, the ECU 10 sends one or more control signals to the engine control system 31, the brake control system 32, and/or the steering control system 33 such that the vehicle 1 travels along the target path.

These control signals particularly are generated based on the amount of control for speed control and/or steering control of the vehicle 1 that is set at each sampling point SP in the target path.

In the following, effects of the vehicle driving support system 100 of this embodiment will be described.

In the above-described configuration, the ECU 10 that particularly is (at least part of) the controller sets the sampling points SP at intervals of d₁ along a part of the candidate path RC that is in the vicinity of the target stop position TP.

Since the first interval d₁ particularly is shorter than the second interval d₂, a plurality of sampling points SP are thus set at a relatively high density in the vicinity of the target stop position TP.

As a result, the path evaluation parameter in the vicinity of the target stop position TP can be evaluated with high accuracy, and the vehicle 1 can be safely stopped at the target stop position TP.

In the case where the brake system and/or the steering system of the vehicle 1 are controlled at each sampling point SP, particularly setting a plurality of sampling points SP at a relatively high density in the vicinity of the target stop position TP allows the vehicle 1 to stop smoothly at the target stop position TP so as to lessen the discomfort that the driver experiences.

On the other hand, for the other part of the candidate path RC (i.e., the part other than the part in the vicinity of the target stop position TP), the ECU 10 particularly sets the sampling points SP at intervals of d₂ along this other part.

Since the interval d₂ particularly is longer than the interval d₁, a plurality of sampling points SP are thus set at a relatively low density in the other part.

As a result, the load of calculating the path evaluation parameter in the other part can be advantageously reduced.

While the relatively low density of the sampling points SP reduces the evaluation accuracy of the path evaluation parameter in the other part, this evaluation accuracy particularly has a relatively minor impact on stopping the vehicle 1 at the target stop position TP.

Thus, the above configuration makes it possible to evaluate a path evaluation parameter with accuracy sufficient for practical use while reducing the load of calculation.

As a result, a balance advantageously is achieved between accurately evaluating the path evaluation parameter of the candidate path RC and reducing the load of calculating the path evaluation parameter.

The ECU 10 particularly is configured to set only the sampling points SP that are set along the candidate path RC including the target stop position TP, at intervals of d₁.

This configuration makes it possible to advantageously reduce the load of calculation by limiting the number of the sampling points SP while ensuring that the vehicle 1 stops safely at the target stop position TP.

The ECU 10 particularly is configured to set the sampling points SP at intervals of d₁ in a larger part of the candidate path RC as the moving speed of the vehicle 1 is higher.

As the moving speed of the vehicle 1 is higher, stopping the vehicle 1 at the target stop position TP particularly requires more attention to safety.

The ECU 10 configured as described above sets the sampling points SP at intervals of d₁ in a larger part of the candidate path RC as the moving speed of the vehicle 1 is higher.

As a result, it advantageously is possible to evaluate the path evaluation parameter in the vicinity of the target stop position TP with high accuracy and safely stop the vehicle 1 at the target stop position TP.

The ECU 10 particularly is configured to set the sampling points SP at longer intervals as the sampling points SP are set farther away from the vehicle 1 in the traveling direction of the vehicle 1.

In this configuration, the sampling points SP can be set at a relatively low density at positions far away from the vehicle 1 in the traveling direction of the vehicle 1, to thereby reduce the load of calculating the path evaluation parameter.

On the other hand, the sampling points SP particularly can be set at a relatively high density in the vicinity of the vehicle 1 where more attention to safety is required, to thereby evaluate the path evaluation parameter in the vicinity of the vehicle 1 with high accuracy.

The ECU 10 particularly is configured to set the sampling points SP at intervals of d₁ along a part of the candidate path RC that is in the vicinity of the vehicle 1, and set the sampling points SP at intervals of d₂ along the other part of the candidate path RC.

In this configuration, the intervals d₁, d₂ used in setting the sampling points SP along the part of the candidate path RC that particularly is in the vicinity of the target stop position TP and along the other part thereof, respectively, are also used in setting the sampling points SP along the part of the candidate path RC that is in the vicinity of the vehicle 1 and along the other part thereof, respectively.

Thus, using particularly common values can simplify the calculation of the path evaluation parameter and reduce the load of calculating the path evaluation parameter.

The ECU 10 particularly is configured to set the amount of control for speed control and/or steering control of the vehicle 1 at each of the plurality of sampling points SP.

This configuration makes it advantageously possible to finely control the speed and/or steering of the vehicle 1 by using a relatively large number of amounts of control in the vicinity of the target stop position TP where the sampling points SP are set at a relatively high density. As a result, the behavior of the vehicle 1 when stopping at the target stop position TP can be smoothed.

The embodiment of the present invention has been described above with reference to specific examples. However, the present invention is not limited to these specific examples. This means that the present invention implemented by a person skilled in the art by making design changes as appropriate to these specific examples is also included in the scope of the present invention as defined in the claims.

### Reference Signs List

1 Vehicle
10 ECU (controller)
21 Camera (travel road information acquiring device)
22 Radar (travel road information acquiring device)
30 Navigation system (travel road information acquiring device)
100 Vehicle driving support system
RC Candidate path
SP Sampling point
TP₁, TP₂ Target stop position

## Claims

1. A vehicle driving support system (100) to be installed in a vehicle (1), the system (100) comprising:
a travel road information acquiring device (21; 22) that can acquire travel road information relating to a travel road (5; 51); and
a controller (10) that is configured to set a target path and a target stop position (TP) on the travel road (5; 51) based on the travel road information and to control the vehicle (1) so as to travel substantially along the target path and stop at the target stop position (TP), wherein
the controller (10) is configured to:
set a plurality of candidate paths (RC) on the travel road (5; 51) based on the travel road information;
set a plurality of sampling points (SP) at specified intervals along each of the plurality of candidate paths (RC);
calculate a path evaluation parameter at each of the plurality of sampling points (SP); and
select one of the plurality of candidate paths (RC) as the target path based on the path evaluation parameter, and
the controller (10) is further configured to set the sampling points (SP) at first intervals (d₁) along a part of the candidate path (RC) that is in the vicinity of the target stop position (TP), and set the sampling points (SP) at second intervals (d₂), longer than the first intervals (d₁), along the other part of the candidate path (RC).

2. The vehicle driving support system according to claim 1, wherein the controller (10) is configured to set only the sampling points (SP) that are set along the candidate path (RC) including the target stop position (TP), at the first intervals (d₁).

3. The vehicle driving support system according to any one of the preceding claims, wherein the controller (10) is configured to set the sampling points (SP) at the first intervals (d₁) in a larger part of the candidate path (RC) as a moving speed of the vehicle (1) is higher.

4. The vehicle driving support system according to any one of the preceding claims, wherein the controller (10) is configured to set the sampling points (SP) at longer intervals as the sampling points (SP) are set farther away from the vehicle (1) in a traveling direction of the vehicle (1).

5. The vehicle driving support system according to claim 4, wherein the controller (10) is configured to set the sampling points (SP) at the first intervals (d₁) along a part of the candidate path (RC) that is in the vicinity of the vehicle (1), and set the sampling points (SP) at the second intervals (d₂) along the other part of the candidate path (RC).

6. The vehicle driving support system according to any one of the preceding claims, wherein the controller (10) is configured to set an amount of control for speed control and/or steering control of the vehicle (1) at each of the plurality of sampling points (SP).

7. A vehicle (1) comprising a vehicle driving support system (100) according to any one of the preceding claims.

8. A computer-implemented vehicle driving support method comprising:
acquiring travel road information relating to a travel road (5; 51); and
setting a target path and a target stop position (TP) on the travel road (5; 51) based on the travel road information;
wherein the vehicle driving support method further comprises:
setting a plurality of candidate paths (RC) on the travel road (5; 51) based on the travel road information;
setting a plurality of sampling points (SP) at specified intervals along each of the plurality of candidate paths (RC);
calculating a path evaluation parameter at each of the plurality of sampling points (SP); and
selecting one of the plurality of candidate paths (RC) as the target path based on the path evaluation parameter,
wherein the sampling points (SP) are set at first intervals (d₁) along a part of the candidate path (RC) that is in the vicinity of the target stop position (TP), and the sampling points (SP) are set at second intervals (d₂), longer than the first intervals (d₁), along the other part of the candidate path (RC).

9. The computer-implemented vehicle driving support method according to claim 8, wherein only the sampling points (SP) that are set along the candidate path (RC) including the target stop position (TP), are set at the first intervals (d₁).

10. The computer-implemented vehicle driving support method according to claim 8 or 9, wherein the sampling points (SP) are set at the first intervals (d₁) in a larger part of the candidate path (RC) as a moving speed of the vehicle (1) is higher.

11. The computer-implemented vehicle driving support method according to any one of the preceding claims 8 to 10, wherein the sampling points (SP) are set at longer intervals as the sampling points (SP) are set farther away from the vehicle (1) in a traveling direction of the vehicle (1).

12. The computer-implemented vehicle driving support method according to claim 11, wherein the sampling points (SP) are set at the first intervals (d₁) along a part of the candidate path (RC) that is in the vicinity of the vehicle (1), and the sampling points (SP) are set at the second intervals (d₂) along the other part of the candidate path (RC).

13. The computer-implemented vehicle driving support method according to any one of the preceding claims 8 to 12, wherein an amount of control for speed control and/or steering control of the vehicle (1) is set at each of the plurality of sampling points (SP).

14. A computer program product comprising computer readable instructions which, when loaded and executed on a suitably system (100), perform the steps of a vehicle driving support method according to any one of the preceding claims 8 to 13.
